# EUROPEAN PATENT APPLICATION

(11) **EP 0 570 138 A2**
(43) Date of publication of application: **18.11.1993**
(21) Application number: 93303393.8
(22) Date of filing: 29.04.1993
(51) Int. Cl.: G11B 33/02, G11B 33/12, G11B 33/08, G11B 25/04

(54) **Portable disk storage apparatus**

(30) Priority: 12.05.1992 JP 119087/92
(71) Applicant: International Business Machines Corporation, Armonk, N.Y. 10504 (US)
(72) Inventor: Koyanagi, Ichiroh, Yokohama-shi, Kanagawa-ken (JP); Ohsawa, Fumitomo, Fujisawa-shi, Kanagawa-ken (JP); Ohtuki, Makoto, Yokohama-shi, Kanagawa-ken (JP); Satoh, Takayuki, Fujisawa-shi, Kanagawa-ken (JP)
(74) Representative: Burt, Roger James, Dr.

(57) **Abstract**

Portable disk storage apparatus comprises a fixed disk storage unit (2); an outer disk case (6) housing the fixed disk storage unit (2) therein; a connector (7) provided at one end of the outer case; a flexible cable (11) provided in the outer case (6) for electrically connecting the connector (7) with the storage unit (2), the flexible cable (11) urging the storage unit (2) toward the other end of the outer case (6); and a first shock absorber (12) provided in the outer case (6) at the other end of the case (6), for urging the storage unit (2) to the one end of the outer case (6) against the flexible cable (11). This provides a shock-resistant and portable disk storage apparatus which is small-sized and whose manufacturing is simple.

## Description

The present invention relates to disk storage apparatus, and more particularly, to a shock-resistant portable disk storage apparatus which can be removable from a data processing system and carried around.

Disk storage is used for storing data and programs in data processing systems such as personal computers. Disk storage is generally divided into two types: One type includes floppy disk storage and optical or magneto-optical storage with exchangeable mediums. The other type includes fixed magnetic hard disk storage in which the medium is not exchangeable. Fixed magnetic hard disk storage apparatus has a fast rotatable disk medium and a fast movable head actuator in an enclosure within which the environment is controlled. Such apparatus has a large amount of storage and is provided with fast access and the high performance in reading and writing operations by a high precision electromechanical servomechanism. Therefore, in this respect, hard disk storage apparatus is superior to disk storage apparatus in which the medium is exchangable. Many examples of conventional hard disk storage apparatus cannot be freely exchanged and carried around because they are relatively large-sized and have a high precision mechanical structure which is very vulnerable to shock.

As the performance and functions of hardware and software of personal computers increase, the demand for fixed magnetic disk storage apparatus which is small-sized, light, exchangeable, and portable rises.

Since disk storage apparatus generally includes a rotatable disk and a head actuator moving on the disk, such apparatus may be damaged by shock. Therefore, for portable disk storage apparatus, measures must be taken to absorb shock.

Japanese Published Unexamined Patent Applications(PUPAs) No.3-137882, No.1-319194, and No.62-137761 disclose conventional types of exchangeable and portable fixed magnetic hard disk storage apparatus. Japanese PUPA No.3-137882 discloses hard disk storage apparatus in which a head/disk enclosure is elastically supported on a frame body by a vibrationproof rubber damper. An electronic card attached to the head/disk enclosure is connected, through a flexible cable, to a connecter. Also disclosed therein is a construction in which the head/disk enclosure and the electronic card are detached and arranged so as to be overlaid with each other in the frame body with only the head/disk enclosure is elastically supported on the frame body by the vibrationproof rubber damper. Japanese PUPAs No.1-319194 and No.62-137761 disclose a construction in which a disk drive body is elastically attached to a case and electrically connected to the outside through a flexible cable.

Though measures to absorb shock are taken in the portable disk storage apparatus disclosed in the above mentioned prior art, there are still problems to be solved in absorbing shock, in making the portable disk storage apparatus small and thin, and in simplifying the corresponding assembly process.

In accordance with the present convention, there is now provided a fixed disk storage unit; an outer case housing the fixed disk storage unit therein; a connector provided at one end of the outer case; a flexible cable provided in the outer case for electrically connecting the connector with the fixed disk storage unit, the flexible cable urging the fixed disk storage unit toward the other end of the outer case; and a first shock absorber provided in the outer case at the other end of the case, for urging the fixed disk storage unit to the one end of the outer case against the flexible cable.

The present invention thus advantageously provides a portable disk storage apparatus which has not only measures to absorb shock, but also the advantages of smallness and thinness in size and simplicity in its manufacturing and assembling processes.

In a preferred embodiment of the present invention, a fixed disk storage unit is encased in an outer case and a connector for electrically connecting to the fixed disk storage unit is provided at one end of the outer case. A flexible cable is provided between the connector and the fixed disk storage unit. One end of the fixed disk storage unit is supported by the flexible cable and the other end of the fixed disk storage unit is supported by shock absorbers with elasticity biassed against the elasticity of the flexible cable.

According to the present invention, the flexible cable functions as a shock absorber and supports the fixed disk storage unit at one end. In other words, the flexible cable serves not only as a supporting member for the fixed disk storage unit, but also as a shock absorber to absorb shock given to the fixed disk storage unit, including shock transmitted from the connector during connection. Since only attachment of the fixed disk storage unit to the flexible cable is needed to complete the assembly process of the outer case and the fixed disk storage unit, it is possible make the disk storage apparatus smaller and its assembly processes simpler.

In a particularly preferred embodiment of the present invention, in arranging the fixed magnetic disk storage unit in the outer case, the head/disk enclosure including the rotatable magnetic disk medium and mechanical parts of the head actuator which moves over the magnetic disk medium for reading and writing, and the electronic card on which electronic circuits for controlling the contents of the head/disk enclosure are mounted, are placed abreast of each other in substantially the same plane in the outer case, and the head/disk enclosure is supported by the shock absorbers.

Since the head/disk enclosure and the electronic card are placed abreast of each other in substantially the same plane in the outer case, it is possible not only to absorb shock but also to make the overall thickness of the disk storage apparatus small.

Preferred embodiments of the present invention will now be described with reference to the accompanying drawings in which:

Figure 1 is a perspective view of a portable disk storage apparatus of the present invention, its adapter, and part of a host data processing unit.

Figure 2 is an exploded perspective view of the portable disk storage apparatus.

Figure 3 is a sectional view showing a connector, taken along the plane of line III-III of Figure 2, of the disk storage apparatus.

Figure 4 is a front view partly in section, of shock absorbers of the disk storage apparatus.

Figure 5 is an exploded perspective view of disk storage apparatus of the present invention.

Figure 6 is a perspective view of the disk storage apparatus and another example of an adaptor for the apparatus.

Figure 7 is a sectional view of the disk storage apparatus and a connector of its adapter when disconnected.

Figure 8 is a sectional view of the disk storage apparatus and the connector of its adapter when connected.

Figure 9 is a circuit diagram of a switching circuit for a power line in the adapter.

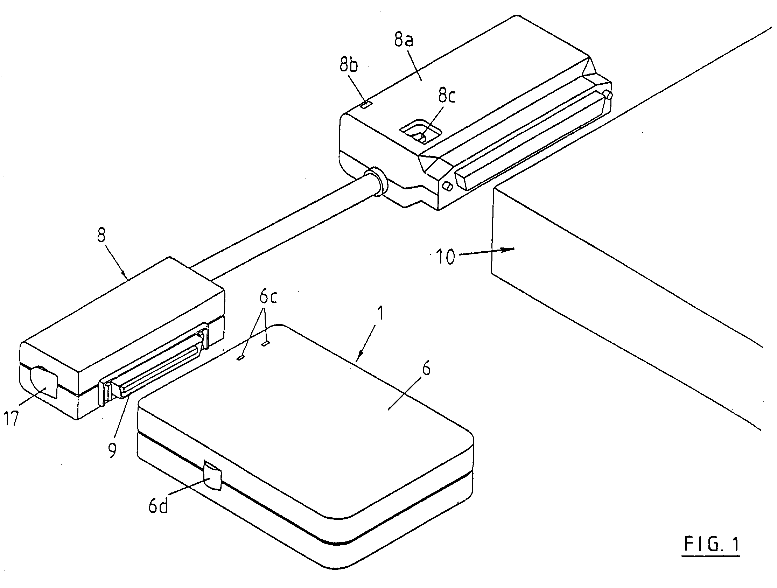

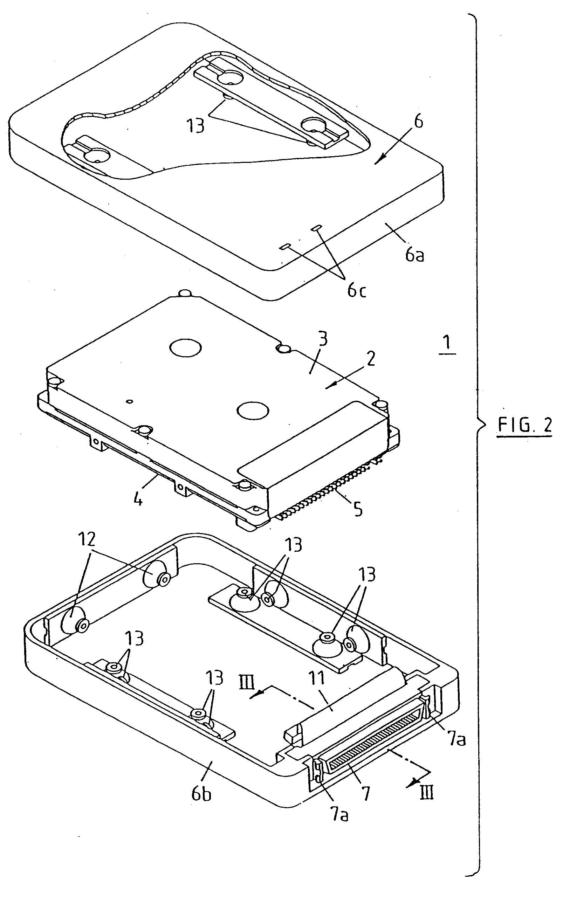

Figure 1 is a perspective view of an exchangeable, shock-resistant, and portable disk storage apparatus 1 of the present invention, and its adapter 8, and a part of a host data processing system 10. Figure 2 is an exploded perspective view showing the internal construction of the disk storage apparatus 1.

In Figure 2, indicated by 2 is a 2.5-inch type of fixed magnetic hard disk storage unit including a head/disk enclosure 3 and an electronic card 4. The head/disk enclosure 3 includes a rotatable magnetic disk medium and a head actuator which moves over the magnetic disk medium for reading and writing. The head/disk enclosure 3 provides a particular environment to protect the mechanical parts therein from dust and dirt.

Attached to the bottom of the head/disk enclosure 3 so as to be overlaid using screws or the like is the electronic card 4 on which electronic circuits for controlling the parts inside the enclosure and for controlling reading and writing are mounted. Provided at one end of the electronic card 4 are card connector pins 5, which serve as an interface for supplying power and for sending and receiving signals. The fixed magnetic hard disk storage unit 2 is a 2.5-inch type, which is 10cm x 7cm x 1.3cm in size and about a hundred grams in weight, and has a storage capacity of 40M to 80M bytes and an average access time of 19ms. An example of such a hard disk storage unit is disclosed in Japanese Patent Application No.3-260500).

Indicated by 6 is a protective plastic outer case for encasing the disk storage unit 2, which is comprised of a cover 6a and a bottom section 6b. The cover 6a and the bottom section 6b are connected through screws. A plastic section forming the outer case 6 has elasticity and plays a part in absorbing shock towards the enclosed storage unit 2. Provided at one end of the bottom section 6b of the outer case 6 is a connector 7, which is connectable to a connector 9 of the adapter 8 shown in Figure 1. Through the adapter 8, the storage unit 2 in the outer case 6 is connected to a host data processing unit 10 such as a personal computer. The connector 7 of the outer case 6 is connected to signal lines and to a power line from the adapter 8, to send and receive signals to and from the adapter 8 and to supply power to the storage unit 2.

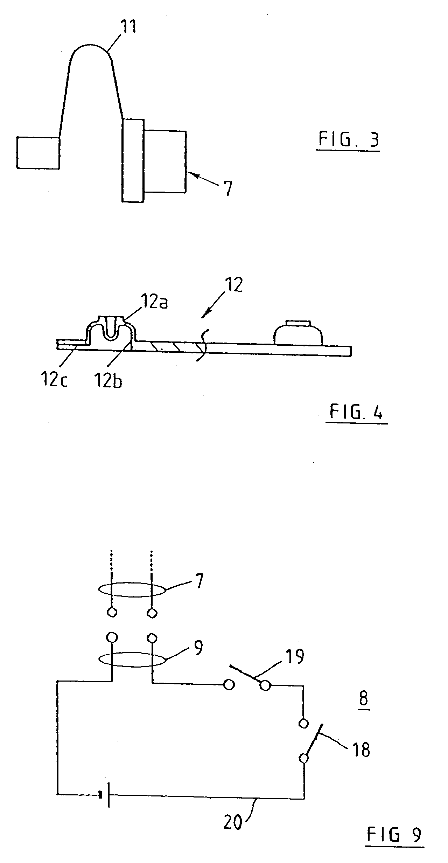

As shown in Figure 2 and Figure 3, the signal lines and the power line which extend from the connector 7 into the outer case 6 are assembled into a belt-shaped flexible cable 11. One end of the flexible cable 11 is connected to the connector 7. The flexible cable 11 is selected to have predetermined elasticity as will be described later. The other end of the flexible cable 11 is connected to the card connector pins 5 of the electronic card 4 to supply signals and power from the adapter 8. The flexible cable 11 is formed into an inverted U-shape between the connector 7 of the outer case 6 and the card connector pins 5 of the disk storage unit 2 so as to elastically support both ends of the storage unit 2 separated from the inner surface of the outer case 6 in conjunction with shock absorbers 12 described later. Moreover, the flexible cable 11 prevents mechanical shock during connection or detachment of the connector 7 to or from the connector 9 of the adapter 8, from being transmitted to the storage unit 2.

Provided to the opposite inside wall the other end of the bottom section 6b of the outer case 6 to the connector 7 are two roughly-cylindrical shock absorbers 12 made of elastic material. Figure 4 shows the details of the shock absorbers 12, in which a concavity is formed in the top 12a which is to contact with the storage unit 2, a cavity is formed in the bottom 12b fixed to the outer case, and an air hole 12c is formed to communicate the cavity to the outside. The shock absorbers 12 are attached, in pairs, to the opposite inside wall to the connector 7 of the bottom section 6b of the outer case 6 by an adhesive tape. The shock absorbers 12 separate both ends of the fixed magnetic hard disk storage unit 2 from the outer case 6 in conjunction with the flexible cable 11 and elastically supports them to absorb shock, and thereby prevents the mechanical structure in the head/disk enclosure 3 from damage. Since the elasticity of the shock absorbers 12 and that of the flexible cable 11 separates both ends of the storage unit 2 from the outer case 6 and elastically supports them to absorb shock, each elasticity is selected to be inversely counterbalanced through the storage unit 2. In other words, the elasticity of the flexible cable 11, when placed in the outer case 6 in an inverted U-shape as shown in Figure 3, is selected not to be broken owing to the elasticity of the shock absorber 12 and the weight of the disk storage unit 2 or not to break the shock absorbers 12 in conjunction with the weight of the disk storage unit 2.

In addition to the shock absorbers 12, provided to the bottom surface of the bottom section 6b of the outer case 6, the inner surface of the both sides to which the connector 7 is not fixed, and the inner surface of the cover 6a are shock absorbers 13. Therfore, the storage unit 2 is elastically supported and separated from the four inner surfaces of the outer case 6. The shock absorbers 13 may be the same structure as the shock absorbers 12. The storage unit 2 is thus supported, by the top sections of the shock absorbers 12 and 13 and the flexible cable 11, so that it floats and is separated from the inner surfaces of the outer case 6.

In the assembly process of the disk storage apparatus 1, the steps for assembling the outer case 6 and the storage unit 2 are as follows: first, the card connector pins 5 of the electronic card 4 of the storage unit 2 are connected to the other end of the flexible cable 11 which extends into the bottom section 6b of the outer case 6; secondly, the storage unit 2 itself is placed on the shock absorbers 12 and 13 implanted into the inside walls of the bottom section 6b of the outer case 6; and finally, the cover 6a and the bottom section 6b of the outer case 6 are connected by screws. Thus, the assembly process becomes remarkably simple. Further, since the storage unit 2 is positioned on the shock absorbers 12 and 13 during the assembly process, it is possible to minimize vibration and shock transmitted to the storage unit 2 during the assembly process. Still further, since the storage unit 2 elastically contacts the shock absorbers 12 and 13 and the flexible cable 11 and is supported, without being fixed in six directions in the outer case 6, it is easy to remove the storage unit 2 from the outer case 6 and exchange it.

In the portable disk storage apparatus 1 of the embodiment, shock from the outside is first absorbed through the elasticity of the outer case 6 and then absorbed by the shock absorbers 12 and 13 and the flexible cable 11, and thereby shock-resistance increases both during non-operation and operation. Such shock-resistant construction is important for a portable fixed magnetic hard disk storage apparatus.

Moreover, a small window 6c in the outer case 6 may be provided with a light-emitting diode (LED), which indicates the running condition of the storage unit 2 to a user so as to prevent the connector 7 from being carelessly removed. A section of the outer case 6 may be provided with a protrusion 6d as a hold to assist in connecting and detaching the connectors 7 and 9 from each other.

In the portable disk storage apparatus 1, since the flexible cable 11 and the shock absorbers 12 facing it elastically support both ends of the storage unit 2 and absorb shock, it is possible to make the outer case 6 thin. Thus, the overall size of the outer case 6 can be about 12.4cm x 8.6cm x 2.5cm, which means that it can be only about 2.4cm in length, about 1.6cm in width, and about 1.2cm in height larger than the 2.5-inch type storage unit 2. Therefore, the present invention also offers the advantage of miniaturization of portable disk storage apparatus. Further, the weight of the portable disk storage apparatus 1 is only around two hundred grams.

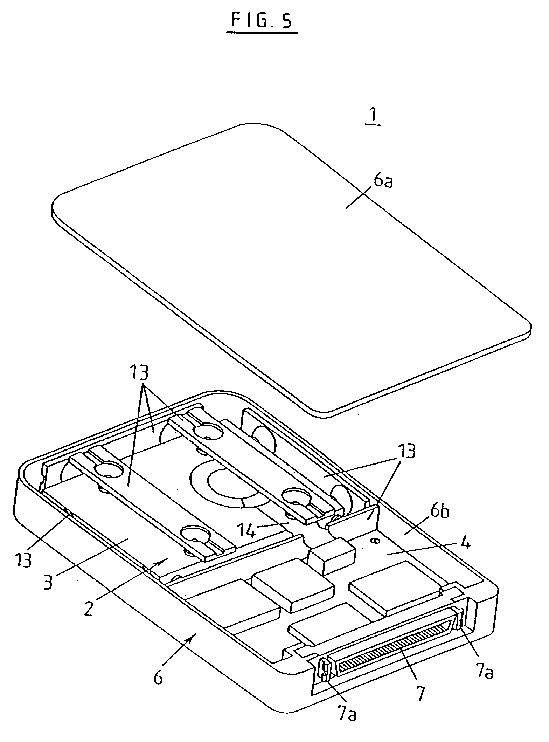

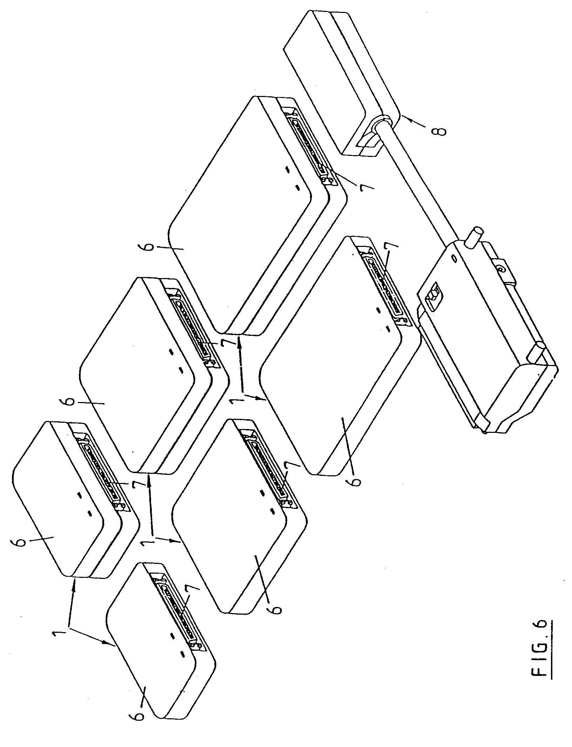

Referring now to Figure 5, in the present invention, the head/disk enclosure 3 and the electronic card 4 on which controlling electronic circuits are mounted, which compose the storage unit 2, are placed abreast on substantially the same plane in the outer case 6. The storage unit 2 shown in Figure 5 may be, for example, a 1.8- or 1.3-inch type storage unit, and the head/disk enclosure 3 encasing the magnetic disk medium and the head actuator may be smaller than in a 2.5-inch type. Therefore, even if the electronic card 4 is placed abreast, it is possible to make the size of the outer case 6 of the portable disk storage apparatus 1 in length and width substantially the same as in a 2.5-inch type. On the other hand, the size of the connector 7 attached to one end of the outer case 6 should remain unchanged to maintain connectability with the adapter 8 even if the size of the storage unit inside the outer case is changed. Therefore, even if the size of the outer case 6 is changed as shown in Figure 6, the connector 7 of the outer case 6 should remain the same size.

As shown in Figure 5, if the electronic card 4 and the head/disk enclosure 3 are placed abreast in the outer case 6, it is possible to make the thickness of the outer case 6 small. The electronic card 4 is connected directly to the connector 7 and attached directly to the outer case 6. The electronic card 4 is resistant enough to shock because only electronic parts are mounted on it. The head/disk enclosure 3 is attached in the outer case 6 in such a way as to be separated from the outer case 6 through the shock absorbers 13. The head/disk enclosure 3 and the electronic card 4 are connected through the flexible cable 14 so that shock cannot be transmitted from the electronic card 4 to the head/disk enclosure 3 during connection. Therefore, the head/disk enclosure 3 is supported by the shock absorbers 13 and the flexible cable 14 in a floating relationship and is separated from the outer case 6. If the head/disk enclosure 3 is detached from the electronic card 4 in this way, shock-resistance is remarkably improved because the shock absorbers 13 have only to support the weight of the head/disk enclosure 3.

Referring to Figure 1, indicated by 8 is an adapter to which the above portable disk storage apparatus 1 of the present invention is connected through the connector 9. The other end 8a of the adapter 8 is connected to the host data processing unit 10 such as a personal computer. The adapter 8 can perform the following functions in addition to serving as a relay device for supplying power to and sending and receiving signals to and from the portable disk storage apparatus 1.

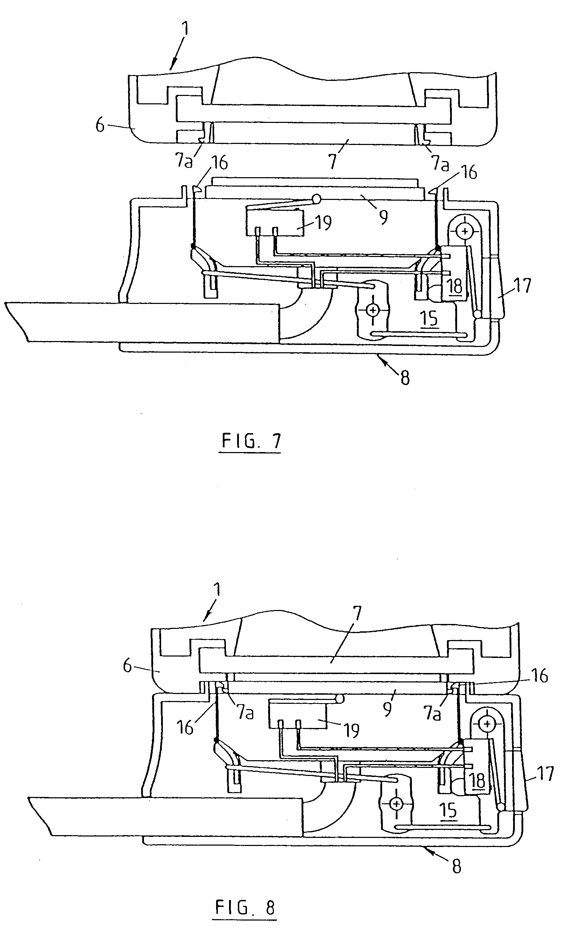

Referring to Figure 7 and Figure 8, formed in both ends of the connector 7 of the outer case 6 of the portable disk storage apparatus 1 are sections 7a which engage with latches 16 of a latch mechanism 15 of the adapter 8. When the adapter 8 and the portable disk storage apparatus 1 are connected, the latches 16 of the adapter 8 are engaged with the sections 7a at both ends of the connector 7. To detach them, a release button 17 of the adapter 8 must be pushed to open the latches 16 and release the engagement with the sections 7a at both ends of the connector 7. This prevents the connector 7 from being carelessly detached from the connector 9 of the adapter 8 during operation of the portable disk storage apparatus 1 and prevents destruction of data stored on the disk medium of the storage unit 2. Further, provided on the release button 17 of the adapter 8 is a switch 18 through which a power line from the adapter 8 to the connector 7 is disconnected by pushing the release button 17. Therefore, when the release button 17 is pushed, the storage unit 2 detects that power is off and immediately begins a power-off sequence.

Therefore, as soon as the release button 17 is carelessly pushed during operation of the storage unit 2, it is turned off and begins power-off sequence so as to preserve a record of its state, so that it is possible to maintain the integrity of data stored on a disk medium. Further, a power switch 19 may be provided to the connector 9 on the side of the adapter 8 which engages with the connector 7 to put a power line from the adapter 8 to the storage unit 2 in a disconnected state unless both connectors 7 and 9 engage with each other. As shown in Figure 9, in the adapter 8, the power switch 19 of the connector 9 and the power switch 18 for the release button 17 may be connected in series so that a power line 20 cannot be connected to the storage unit 2 until both switches are closed, and so that power may be supplied from the power line 20 only when both the connectors 7 and 9 engage with each other and the release button 17 has not been pushed. Thus the integrity of data in the disk storage apparatus 1 may be preserved.

Referring now to Figure 1, the adapter 8 may include a memory in which a basic input/output system (BIOS) is stored for the disk storage apparatus 1, so as to be able to make use of the disk storage apparatus 1 immediately if only the adapter 8 is connected to the host personal computer 10. This allows the personal computer 10 to make use of the disk storage apparatus 1 connected to the adapter 8 without using the basic input/output system of the personal computer 10, and therefore has an advantage that a user can make use of the disk storage apparatus 1 at once without rewriting every CONFIG.SYS of the operating system of the host personal computer 10.

Further, the adapter 8 may include a memory in which a diagnostic program is stored and a light-emitting diode (LED) 8b, a buzzer or the like so as to inform a user of a state of the disk storage apparatus 1 connected to the adapter 8. Such a measure is taken for the reason that the adapter 8 itself needs to, for example, diagnose the failure in the disk storage apparatus 1 unless the basic input/output system of the host 10 is used.

Still further, the adapter 8 may have a function for automatically detecting the specification of an interface to the disk storage apparatus 1 connected to the adapter 8 and that of an interface to the host, that is, the personal computer 10 to which the adapter 8 is connected and a function for converting different interface designs, so that the disk storage apparatus 1 with one interface design may be connected to a host, with a different interface design. For example, if the disk storage apparatus 1 has a SCSI interface and the host personal computer 10 has an AT interface, the adapter 8 may have a function for converting different interface designs so that the disk storage apparatus 1 with the SCSI interface may be connected to the personal computer 10 with the AT interface.

Further, the adapter 8 may include a power function which allows the disk storage apparatus 1 to be connected thereto without affecting power supplied to a host. In this case, power terminals and a power switch 8c are provided to the adapter 8.

According to the construction of the present invention, a flexible cable supports one end of a fixed disk storage unit. Therefore, the flexible cable serves not only as a supporting member for the fixed disk storage unit, but also as a shock absorber to absorb shock, including shock transmitted from a connector during connection. This permits portable disk storage apparatus to be made smaller by a simplified assembly process.

Further, in the portable disk storage apparatus according to the present invention, the head/disk enclosure including mechanical parts therein, and the electronic card on which electronic circuits for controlling the head/disk enclosure are mounted, are placed abreast of each other on substantially the same plane in an outer case, and the head/disk enclosure is supported by the shock absorbers in the outer case. This provides shock resistance for the portable disk storage apparatus and also to make its overall thickness small.

## Claims

1. Portable disk storage apparatus, comprising:
a fixed storage unit (2);
an outer disk case (6) housing the storage unit (2) therein;
a connector (7) provided at one end of the outer case;
a flexible cable (11) provided in the outer case (6) for electrically connecting the connector (7) with the storage unit (2), the flexible cable (11) urging the storage unit (2) toward the other end of the outer case (6); and
first shock absorber (12) provided in the outer case (6) at the other end of the case (6) for urging the storage unit (2) to the one end of the outer case (6) against the flexible cable (11).

2. Apparatus according to claim 1, wherein the first shock absorber includes discrete elastic members provided on the inside wall at the other end of the outer case.

3. Apparatus according to any preceding claim, wherein second shock absorbers are provided on the innner surfaces of the top and bottom sides and the right and left sides of the outer case so as to support the fixed disk storage unit in isolation from the inner surfaces of the outer case.

4. Apparatus according to claim 3, wherein the second shock absorbers are discrete elastic members provided on the inner surfaces of the outer case.

5. Apparatus according to any of claims 2 to 4, wherein the elastic members are cylindrical, and one end thereof is fixed to the inner surface of the outer case and the other end thereof contacts the fixed disk storage unit.

6. Apparatus according to any preceding claim, wherein the fixed disk storage unit has a head/disk enclosure including a rotatable disk medium and a movable head actuator which is able to move over the disk medium for reading/writing therein and an electronic card on which electronic circuits for controlling the head/disk enclosure are mounted, and one end of the flexible cable is connected to the connector and the other end of the flexible cable is connected to card connector pins provided on the electronic card.

7. Apparatus according to claim 6, wherein the head/disk enclosure and the electronic card are positioned substantially flush with each other in the outer case.

8. Apparatus according to claim 7, wherein the head/disk enclosure and the electronic card are connected through a flexible cable.

9. Apparatus according to any of claims 6 to 8, wherein the connector is of a predetermined size regardless of the size of the head/disk enclosure.

10. Apparatus according to any preceding claim, wherein the outer case is made of materials which absorb shock.
